# EUROPEAN PATENT SPECIFICATION

(11) **EP 2 611 951 B1**
(45) Date of publication and mention of the grant of the patent: **21.08.2019**
(21) Application number: 11755183.8
(22) Date of filing: 29.08.2011
(51) Int. Cl.: B21B 1/22, B21B 27/00, C25D 5/48, C25D 5/36, C23C 2/26

(54) **GALVANIZED CARBON STEEL WITH STAINLESS STEEL-LIKE FINISH**
VERZINKTER STAHL MIT EDELSTAHLARTIGEM FINISH
ACIER ORDINAIRE GALVANISÉ AVEC FINITION DE TYPE ACIER INOXYDABLE

(30) Priority: 30.08.2010 US 378194 P
(43) Date of publication of application: 10.07.2013
(73) Proprietor: Ak Steel Properties, Inc., West Chester, OH 45069 (US)
(72) Inventor: MYERS, Frederick, Alan, Middletown OH 45042 (US)
(74) Representative: Samson & Partner Patentanwälte mbB
(86) International application number: PCT/US2011/049567
(87) International publication number: WO 2012/030726

(56) References cited:
- JP-A- H02 185 959
- US-A1- 2007 009 755
- US-A1- 2009 047 540
- US-A1- 2010 136 362
- H. Asgari ET AL: "Influence of force variations in skin pass rolling on texture and surface reactivity of hot dip galvanised low carbon steel sheets", Ironmaking & Steelmaking: processes, products and applications, vol. 35, no. 7, 18 October 2008 (2008-10-18), pages 545-548, XP055415907, United Kingdom ISSN: 0301-9233, DOI: 10.1179/174328108X335168

## Description

### BACKGROUND

Polished stainless steel is expensive relative to carbon steel. It also can be difficult to remove fingerprints and smudges on fabricated stainless steel components such as kitchen appliances. For these reasons, several lower cost "faux stainless steel" alternatives have been developed including painted carbon steel and polished or brushed hot dipped galvanized (HDG) or electrogalvanized (EG) carbon steel. However, the painted products do not have the texture of polished stainless steel. The texture of polished/brushed HDG/EG products are more similar to polished stainless steel.

However, they are more difficult to produce because the abrasive operations used to create the textured surface remove part or all of the galvanized coating. This can affect the uniformity of appearance and the corrosion resistance of the material.

US 2009/0047540 A1 discloses an abraded metallic coating having a substantially uniform patterned appearance which simulates the surface appearance of polished stainless steel.

US 2010/0136362 A1 discloses a method of polishing a minimum spangle aluminium-zinc alloy hot-dip coating applied to sheet steel to achieve a stainless steel like surface appearance.

JP H02 185959 A discloses a method of manufacturing hot-dip galvanized sheet steel of superior image gloss.

The article "Influence of force variations in skin pass rolling on texture and surface reactivity of hot dip galvanised low carbon steel sheets" from H. Asgari et al. discloses a research work with respect to a change of a skin pass rolling force in the range of 50 to 200 kN in steps of 30 kN being applied to galvanised coatings.

### BRIEF SUMMARY

The present invention is defined in the independent claims to which reference should be made. Advantageous features are set out in the appended dependent claims In one embodiment "faux stainless steel" may be produced by processing galvanized carbon steel through a temper mill using textured rolls to develop a "polished" type surface. In this case, the galvanized coating is not removed by abrasion but is compressed thereby providing a more uniform substrate than conventional polishing or brushing. The resulting strip may then be coated with a clear organic film to provide additional appearance and corrosion benefits including anti-fingerprint resistance.

These and other objects and advantages shall be made apparent from the accompanying drawings and the description thereof.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIGURE la depicts scanning electron microscope micrographs of cross sections of polished EG carbon steel. Non-textured top surface.
FIGURE 1b depicts scanning electron microscope micrographs of cross sections of polished EG carbon steel. Textured bottom surface. Much of the EG coating has been removed
FIGURE 2 depicts the results of cyclic corrosion testing on polished EG carbon steel and temper mill textured EG carbon steel.
FIGURE 3 a depicts light microscope image of conventionally polished stainless steel.
FIGURE 3b depicts light microscope image of brushed EG carbon steel.
FIGURE 4 is a schematic of an embodiment of a texturing process.
FIGURE 5 depicts scanning electron microscope micrographs of cross sections of EG coated carbon steel sheet after temper mill texturing.
FIGURE 6 depicts the result of cyclic corrosion testing of stainless steel, textured EG carbon steel, and textured EG carbon steel with an organic coating.
FIGURE 7 depicts the result of forming test on temper mill textured EG carbon steel with an organic coating.

### DETAILED DESCRIPTION

Carbon steel based materials are typically alloys of iron and carbon with alloy additions that improve processability, formability, corrosion resistance and other desired performance characteristics. Due to the iron rich nature of the surfaces, these materials are susceptible to corrosion from exposure to atmospheric moisture, chemicals, etc. In many cases, carbon steels are coated with other metals such as zinc or aluminum to improve the corrosion performance. Galvanized steels are widely used in automotive body panels, appliances, and construction products. Metallic coated carbon steels typically do not form conventional iron based "red rust" corrosion products. The oxides formed on the surface of these coated products vary from "white rust" in the case of galvanized steel to less visible aluminum oxides on aluminum rich surfaces. In many cases, metallic coated steels are covered with organic coatings to provide additional corrosion protection as well as appearance attributes.

Stainless steels contain chrome, nickel, or both, in addition to iron, carbon, and other alloy components associated with carbon steels. The presence of these elements provides improved corrosion resistance as well as appearance benefits. Most stainless steels are not painted but are processed with polished surfaces that impart a desirable texture to the material. In addition to applications such as commercial kitchens, bathroom fixtures, automotive trim, and construction panels, polished stainless steels are becoming increasingly popular in home appliance applications. One of the disadvantages of stainless steels is that due to the presence of chrome and nickel as well as processing differences their costs can exceed those of carbon steels by 2 times or more. Stainless
steels are also susceptible to fingerprints and other cosmetic stains that can be difficult to remove. Consequently, there has been a desire to utilize less costly carbon steel based products that have a visual appearance similar to stainless steel and also provide a surface that is less susceptible to fingerprinting, etc. Therefore, several "faux stainless" type carbon steel based products have been introduced to meet these needs.

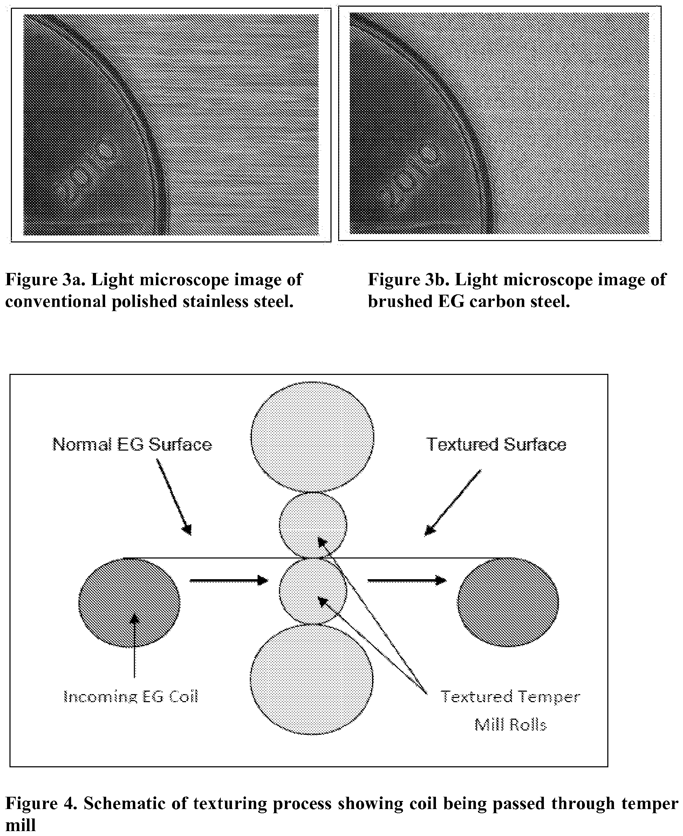

In one embodiment, electrogalvanized carbon steel strip is passed though a temper mill using the same textured work rolls employed to apply a commercial "rolled on" finish to stainless steel (Figure 4). One major difference from the abrasive processes discussed above is that the forces imparted by the mill rolls compresses the zinc coating during the texturing operation instead of abrading it. Therefore, the amount of zinc coating that is removed during processing is minimal. As an alternative to a temper mill, a steel processing rolling mill equipped with textured work rolls that impart the texture to the substrate may be used. The pressure associated by the mill rolls compresses the surface of the substrate as opposed to abrasive operations associated with belt polishing or brushing which removes portions of the surface. According to the invention, the roll force of the temper mill is in the range of 500,000-1100,000 pounds force or may be in the range of 600,000 to 900,000 pounds force to ensure adequate texture transfer from the work rolls without damaging the EG coating.

The texture may have a surface roughness of about 5 to about 60 microinches, or from about 20 to about 40 microinches. The texture may be principally unidirectional parallel grains or lines. The gloss of the surface may be measured by a Byk Mirror Tri Gloss instrument at 60°; which may be 100 or more, or 200 or more. This gloss measurement is without an organic coating on the textured carbon steel.

Due to the high forces exerted on the surface of stainless steel by the temper mill, and the fact that the surface being textured was a metallic coating less than 0.5 mils (0.0005 in) thick, one of the concerns was that the softer zinc surface would not respond similarly to the work rolls as stainless steel. In addition, most stainless steels pass through a "dry" temper mill without the use of lubricating fluids versus carbon steel tempering which in many cases flood the surface with a lubricating fluid during
processing. Consequently, these issues could be expected to cause build-up on the work rolls due to galling, cracking, or flaking of the zinc thereby resulting in distortions and inconsistencies in the appearance of the surface. In the current process, the pressure exerted on the EG surface by the temper mill is controlled to ensure adequate transfer of the work roll pattern but not enough to deteriorate the zinc coating.

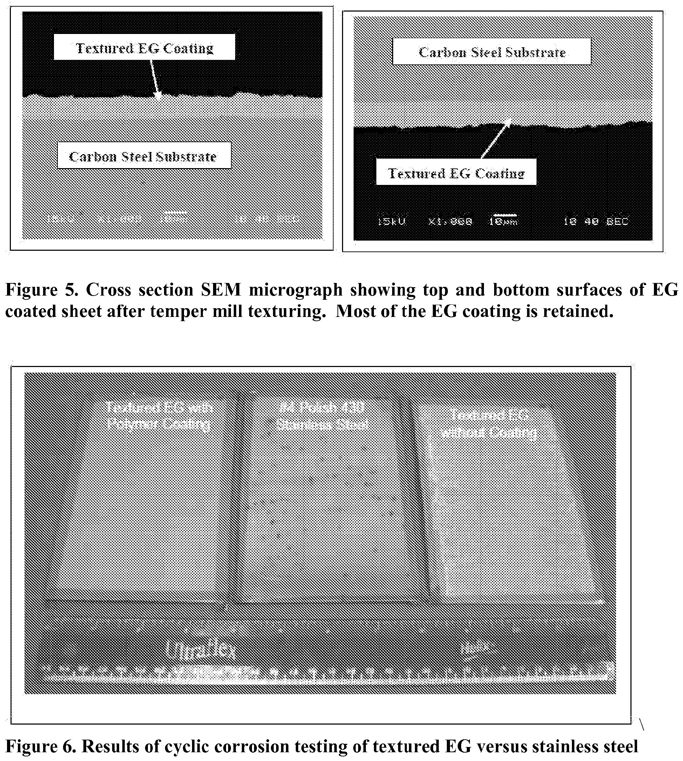

The galvanized coating may be created by electrogalvanizing carbon steel. In one embodiment the coating may be selected from zinc, zinc-nickel, zinc-iron, aluminum, or zinc-aluminium. Alternatively, these coatings may be applied by hot dipping the carbon steel strip. Due to the compressive nature of the process, relatively light zinc or other metallic coating weights such as 30G/30G (30 g/m on each side) can be used. The coating weights may be from about 20 to about 90 g/m or may be from about 30 to about 60 g/m . Light coating weights would be difficult to process using abrasive techniques since the integrity of the relatively thin coatings would be more likely to be
compromised. Micrographs of textured carbon steel made by this process show that most of the EG coating was retained (Figure 5).

This procedure imparts a texture to the soft zinc surface similar to the pattern seen on polished stainless steel. Process conditions are similar to those utilized for imparting a rolled on finish to stainless steel. Once the texture operation is complete, the coil is subsequently coated with a polymer film that provides appearance, corrosion, and anti- fingerprint protection. This film could also contain an antimicrobial additive such as silver ion/zeolite based AGION®.

In one embodiment the textured carbon steel is coated with an organic coating that provides additional corrosion protection and appearance attributes that can be varied according to the end application. The coating may be a transparent polyester film, although epoxies, acrylics, polyurethanes could also be used. The coating thickness may be 0.5 mil (0.0005 inch) but could vary from about 0.1 mil to about 1.0 mil (2.54 µm to about 25.4 µm), or about 0.2 mil to 0.6 mil. The gloss of the coating could be adjusted to provide the desired level of reflectivity and fingerprint resistance. Typical 60°gloss ranges as measured by a Byk Mirror Tri Gloss instrument would be 10-85 with the less reflective lower levels promoting anti-fingerprint performance and the higher ranges providing a "shiny" or reflective appearance. The gloss may be in the range of 20-40 for fingerprint resistance or a range of 65-85 for maximum reflectivity. In one embodiment, the coatings may be translucent or opaque in order to provide color or a particular tint to the substrate.

Additives such as silver based antimicrobials or polymer waxes could be included in the coating formulation to provide additional benefits such as antimicrobial protection or to improve formability. The pencil hardness of the coating may have a range of F-5H, or a range of H-3H.

The resulting organic coated textured metallic coated carbon steel would be able to be processed using conventional metal forming or shaping equipment and be subjected to bending, drawing, stretching operations without flaking, chipping or other damage to the appearance critical surface. A surface treatment to the carbon steel after texturing but before coating may be used to improve the adhesion of the organic film to the surface. Examples of surface treatment include zinc or iron phosphates, chromates or water based epoxies that are used to promote adhesion of organic coatings to metal substrates. For some applications the use of a clear type water based epoxy is preferred.

In one embodiment, an organic coated textured carbon steel has a surface roughness of 5-40 microinches, or a range of 15-30 microinches. The 60° gloss may be in the range of 10-85, or 15-80. The coefficient of friction as measured by a Draw Bead Simulator test may be in the range of 0.03-0.07, or a range of 0.4 to 0.06. The organic coating thickness may be 0.1 to about 1.0 mil thick, or about 0.2 to about 0.6 mils. Pencil hardness may be in the range of F-5H, or H-3H.

### Example 1 (not part of the present invention)

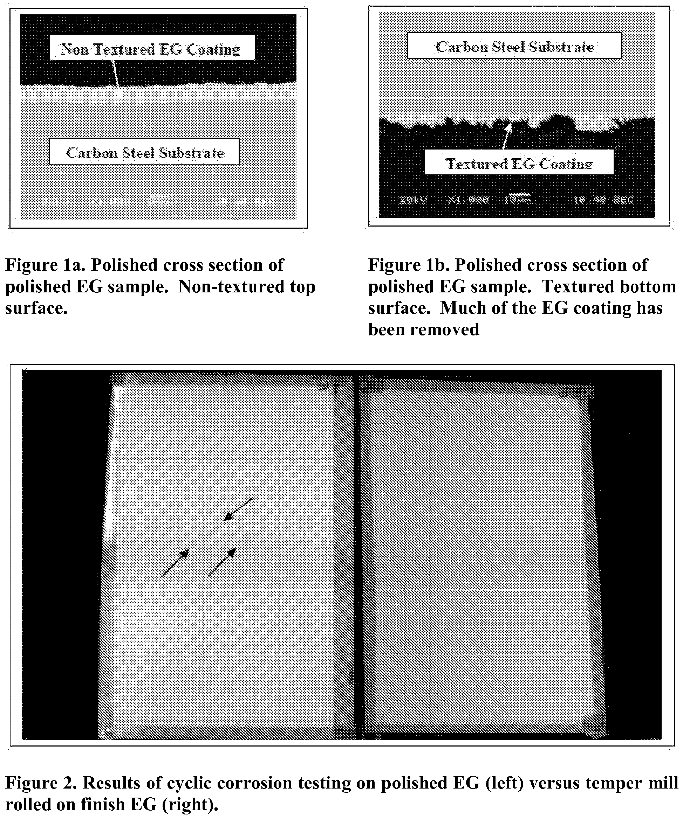

Electrogalvanized carbon steel strip may be processed on a production line that is used to polish stainless steel. A surface texture is developed by contact with abrasive belts. Texturing typically is limited to one surface. The speed of the strip, speed of the belts, the pressure applied, the nature and grit size of the abrasive as well as the hardness of the material being processed all influence the appearance of the polished product. Due to the softer nature of the zinc surface on the electrogalvanized steel relative to the
surface of stainless steel adjustments are needed to make sure that the zinc coating is not completely removed during polishing. Samples from a coil processed in this manner were checked for zinc coating integrity and it was found that from a coating weight perspective, approximately 50% of the zinc remained after processing. However, cross sections of the processed material indicated that there were isolated areas where the zinc coating was almost entirely removed (Figure 1). This polished carbon steel was subsequently coated with a clear polymer film to provide additional barrier type corrosion and anti-fingerprint protection. The coating can be formulated to provide various levels of gloss and reflectivity. However, there were concerns about the ability to control the amount of zinc removal and consequently the consistency of appearance and performance using an abrasive based process.

Panels that were processed in this manner developed small isolated areas of "red rust" when exposed to ambient room conditions prior to organic coating indicating that there was insufficient zinc remaining to protect the steel substrate. As shown in Figure 2, organic coated panels also developed small corrosion related surface imperfections after cyclic corrosion testing. The test conditions are the same as discussed in Example 3. This would limit applications of the material to those requiring minimal corrosion or surface appearance requirements.

### Example 2 (not part of the present invention)

A second trial was conducted using an electrogalvanized carbon steel strip where the surface was continuously subjected to an abrasive brush type roll instead of an abrasive belt. This procedure tended to be less aggressive with regard to zinc removal. However, this procedure resulted in a visual appearance that deviated from the desired texture typically associated with polished stainless steel (Figure 3). It is possible that by varying the processing conditions such as the relative roll and strip speeds, roll pressure and roll grit and texture that a more desirable appearance may have been developed. However, as with other abrasive based processing, there is the same concern that it will be difficult to control of the amount of zinc removal. Consequently, uniformity of appearance and corrosion performance may be difficult to maintain. Visual examination
of the material after processing indicated the surface texture that was developed and is shown in Figure 3 was sufficiently different from polished stainless steel to restrict use of the material to specialized applications such as decorative building panels. Therefore, use of an abrasive brush type roll would not be suitable for use in higher volume household appliance type applications.

### Example 3 (which is only a reference example)

Performance evaluation tests have been conducted on samples from an electro galvanized carbon steel coil that was processed using the temper mill and subsequently coated with a clear polymer film. The amount of galvanized coating that was removed was minimal. The sample was subjected to corrosion and formability tests. Corrosion results are shown below in Figure 6.

The wet/dry cyclic corrosion testing has shown that electrogalvanized steel with a rolled on texture finish and an organic coating displayed less surface pitting than polished 430 stainless steel. Samples tested without the organic coating also did not pit but exhibited areas of white rust typical of galvanized steel. The 4x6 inch sample edges were taped to eliminate cut edge effects and the samples dipped in a 5% salt solution for 15 min. The samples were then air dried for 90 minutes and placed in a humidity cabinet at 60°C for approximately 72 hours. The dip/dry portion of the cycle was repeated the samples placed in the humidity cabinet for approximately another 24 hours before being removed. Samples were visually evaluated to compare the extent and type of corrosion found on the surfaces.

### Example 4

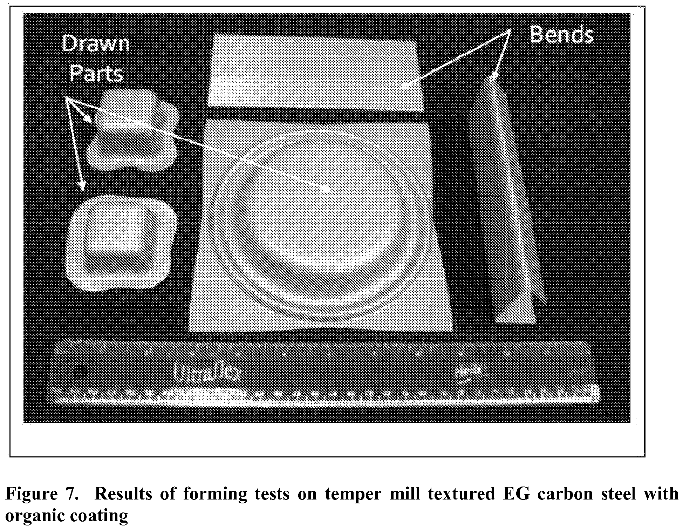

Samples of the textured electrogalvanized carbon steel with the clear organic coating could be successfully bent, drawn, and stretched using typical metal forming operations (Figure 7). There was no peeling, cracking or crazing of the surface during these operations. The material has the inherent benefit of a low coefficient of friction organic coating that enhances the formability of the material. In many cases the use of additional wet type drawing lubricants or adhesive plastic films would not be required.

A Hille Wallace Universal Cup Testing machine was utilized to form the approximately 1.25 inch deep square cups. Tooling used was a 1.375 inch punch and a 1.483 inch die with a 31/64 radius. The approximately 0.875 inch deep "flat top" Marciniak dome was formed using a Model 866 MTS Forming Press. Tooling included a 3.875 inch diameter punch and a 4.0 inch die. The bend samples were formed using a Diacro Finger Brake and a Wabash Hydraulic Press. All samples were formed as processed (carbon steel substrate + EG coating with rolled on finish + organic clear coat) without applying additional oil based forming lubricants or plastic protective film.

While the present disclosure has illustrated by description several embodiments and while the illustrative embodiments have been described in considerable detail, it is not the intention of the applicant to restrict or in any way limit the scope of the appended claims to such detail. Additional advantages and modifications may readily appear to those skilled in the art.

## Claims

1. An unabraded textured carbon steel having a rolled on finish, the unabraded textured carbon steel comprising a carbon steel with a galvanized coating wherein the galvanized coating is unabraded, compressed and textured,
wherein the unabraded textured carbon steel is obtainable by a process comprising the steps of:
(a) applying the unabraded galvanized coating to the carbon steel; and
(b) compressing the unabraded galvanized coating, wherein the compression is provided by a temper mill using textured rolls with an application of a roll force of 2 × 10⁶-4.9 × 10⁶ Newtons (500,000-1,100,000 pounds);
wherein the rolled on finish is principally unidirectional parallel grains or lines on the unabraded galvanized coating.

2. The textured carbon steel of claim 1, wherein the galvanized coating is selected from zinc, zinc-nickel, zinc-iron, aluminum, or zinc-aluminium.

3. The textured carbon steel of any of the preceding claims, wherein the galvanized coating is electrogalvanized.

4. The textured carbon steel of any of the preceding claims, wherein the galvanized coating has a coating weight of about 20 to about 90 g/m.

5. The textured carbon steel of any of the preceding claims, wherein the steel additionally comprises an organic coating selected from polyester, epoxy, acrylic, and polyurethane.

6. The textured carbon steel of any of the preceding claims, wherein the steel additionally comprises an organic coating, wherein the organic coating has a thickness of 2.54 µm tο about 25.4 µm (0.1 mil to about 1.0 mil).

7. The textured carbon steel of any of claims 5 and 6, wherein the organic coated steel has a pencil hardness range of F-5H.

8. The textured carbon steel of any of claims 5-7, wherein the surface of the organic coated textured carbon steel has a 60° gloss of 10-85 and a coefficient of friction of 0.03-0.07 as measured by a draw bead simulator test.

9. A process for making an unabraded textured carbon steel having a rolled on finish, the unabraded textured carbon steel comprising
a carbon steel with a galvanized coating, wherein the galvanized coating is unabraded, compressed and textured, the process comprising the steps of:
(a) applying the unabraded galvanized coating to the carbon steel; and
(b) compressing the unabraded galvanized coating, wherein the compression is provided by a temper mill using textured rolls with an application of a roll force of 2 × 10⁶-4.9 × 10⁶ Newtons (500,000-1,100,000 pounds);
wherein the rolled on finish is principally unidirectional parallel grains or lines on the unabraded galvanized coating.

10. The process of claim 9, additionally comprising the step of coating an organic coating over the galvanized coating.

## Patentansprüche

1. Nichtabgeriebener, strukturierter Kohlenstoffstahl mit einem aufgewalzten Finish, wobei der nichtabgeriebene strukturierte Kohlenstoffstahl einen Kohlenstoffstahl mit einer verzinkten Beschichtung umfasst, wobei die verzinkte Beschichtung nichtabgerieben, komprimiert und strukturiert ist,
wobei der nichtabgeriebene strukturierte Kohlenstoffstahl durch ein Verfahren erhältlich ist, das die folgenden Schritte umfasst:
(a) Aufbringen der nichtabgeriebenen verzinkten Beschichtung auf den Kohlenstoffstahl; und
(b) Komprimieren der nichtabgeriebenen verzinkten Beschichtung, wobei das Komprimieren durch ein Nachwalzwerk unter Verwendung von strukturierten Walzen mit einer Anwendung einer Walzkraft von 2 × 10⁶-4.9 × 10⁶ Newton (500.000-1.100.000 Pfund) bereitgestellt wird;
wobei das aufgewalzte Finish im Wesentlichen unidirektionale parallele Fasern oder Linien auf der nichtabgeriebenen verzinkten Beschichtung ist.

2. Strukturierter Kohlenstoffstahl nach Anspruch 1, bei dem die verzinkte Beschichtung ausgewählt ist aus Zink, Zink-Nickel, Zink-Eisen, Aluminium und Zink-Aluminium.

3. Strukturierter Kohlenstoffstahl nach einem der vorherigen Ansprüche, bei dem die verzinkte Beschichtung galvanisch verzinkt ist.

4. Strukturierter Kohlenstoffstahl nach einem der vorherigen Ansprüche, bei dem die verzinkte Beschichtung ein Beschichtungsgewicht von etwa 20 bis etwa 90 g/m aufweist.

5. Strukturierter Kohlenstoffstahl nach einem der vorherigen Ansprüche, bei dem der Stahl zusätzlich eine organische Beschichtung umfasst, ausgewählt aus Polyester, Epoxy, Acryl und Polyurethan.

6. Strukturierter Kohlenstoffstahl nach einem der vorherigen Ansprüche, bei dem der Stahl zusätzlich eine organische Beschichtung umfasst, wobei die organische Beschichtung eine Dicke von 2,54 µm bis etwa 25,4 µm (0,1 mil bis etwa 1,0 mil) aufweist.

7. Strukturierter Kohlenstoffstahl nach einem der Ansprüche 5 und 6, bei dem der organisch beschichtete Stahl einen Bleistifthärtebereich von F-5H aufweist.

8. Strukturierter Kohlenstoffstahl nach einem der Ansprüche 5-7, bei dem die Oberfläche des organisch beschichteten strukturierten Kohlenstoffstahls einen 60°-Glanz von 10-85 und einen Reibungskoeffizienten von 0,03-0,07 aufweist, gemessen durch einen Zugwulstsimulator-Test.

9. Verfahren zur Herstellung eines nichtabgeriebenen strukturierten Kohlenstoffstahls mit einem aufgewalzten Finish, wobei der nichtabgeriebene strukturierte Kohlenstoffstahl umfasst
einen Kohlenstoffstahl mit einer verzinkten Beschichtung, wobei die verzinkte Beschichtung nichtabgerieben, komprimiert und strukturiert ist, wobei das Verfahren die folgenden Schritte umfasst:
(a) Aufbringen der nichtabgeriebenen verzinkten Beschichtung auf den Kohlenstoffstahl; und
(b) Komprimieren der nichtabgeriebenen verzinkten Beschichtung, wobei das Komprimieren durch ein Nachwalzwerk unter Verwendung von strukturierten Walzen mit einer Anwendung einer Walzkraft von 2 × 10⁶-4.9 × 10⁶ Newton (500.000-1.100.000 Pfund) bereitgestellt wird;
wobei das aufgerollte Finish im Wesentlichen unidirektionale parallele Fasern oder Linien auf der nichtabgeriebenen verzinkten Beschichtung ist.

10. Verfahren nach Anspruch 9, zusätzlich umfassend den Schritt des Beschichtens einer organischen Beschichtung auf der verzinkten Beschichtung.

## Revendications

1. Acier au carbone texturé non abrasé ayant un fini laminé, l'acier au carbone texturé non abrasé comprenant un acier au carbone avec un revêtement galvanisé dans lequel le revêtement galvanisé est non abrasé, comprimé et texturé,
dans lequel l'acier au carbone texturé non abrasé peut être obtenu par un procédé comprenant les étapes :
(a) d'application du revêtement galvanisé non abrasé à l'acier au carbone ; et
(b) de compression du revêtement galvanisé non abrasé, dans lequel la compression est fournie par un laminoir adoucisseur utilisant des cylindres texturés avec une application d'une force de cylindre de 2 x 10⁶ à 4,9 x 10⁶ Newtons (500 000 à 1 100 000 livres) ;
dans lequel le fini laminé est principalement des grains ou lignes parallèles unidirectionnels sur le revêtement galvanisé non abrasé.

2. Acier au carbone texturé selon la revendication 1, dans lequel le revêtement galvanisé est sélectionné parmi le zinc, le zinc-nickel, le zinc-fer, l'aluminium, ou le zinc-aluminium.

3. Acier au carbone texturé selon l'une quelconque des revendications précédentes, dans lequel le revêtement galvanisé est électrogalvanisé.

4. Acier au carbone texturé selon l'une quelconque des revendications précédentes, dans lequel le revêtement galvanisé a un poids de revêtement d'environ 20 à environ 90 g/m.

5. Acier au carbone texturé selon l'une quelconque des revendications précédentes, dans lequel l'acier comprend de surcroît un revêtement organique sélectionné parmi le polyester, l'époxy, l'acrylique, et le polyuréthane.

6. Acier au carbone texturé selon l'une quelconque des revendications précédentes, dans lequel l'acier comprend de surcroît un revêtement organique, dans lequel le revêtement organique a une épaisseur de 2,54 µm à environ 25,4 µm (0,1 mil à environ 1,0 mil).

7. Acier au carbone texturé selon l'une quelconque des revendications 5 et 6, dans lequel l'acier revêtu organique a une plage de dureté au crayon de F à 5H.

8. Acier au carbone texturé selon l'une quelconque des revendications 5 à 7, dans lequel la surface de l'acier au carbone texturé revêtu organique a un brillant à 60° de 10 à 85 et un coefficient de frottement de 0,03 à 0,07 tel que mesuré par un essai de simulateur au jonc de freinage.

9. Procédé de fabrication d'un acier au carbone texturé non abrasé ayant un fini laminé, l'acier au carbone texturé non abrasé comprenant un acier au carbone avec un revêtement galvanisé, dans lequel le revêtement galvanisé est non abrasé, comprimé et texturé, le procédé comprenant les étapes :
(a) d'application du revêtement galvanisé non abrasé à l'acier au carbone ; et
(b) de compression du revêtement galvanisé non abrasé, dans lequel la compression est fournie par un laminoir adoucisseur utilisant des cylindres texturés avec une application d'une force de cylindre de 2 x 10⁶ à 4,9 x 10⁶ Newtons (500 000 à 1 100 000 livres) ;
dans lequel le fini laminé est principalement des grains ou lignes parallèles unidirectionnels sur le revêtement galvanisé non abrasé.

10. Procédé selon la revendication 9, comprenant de surcroît l'étape de revêtement d'un revêtement organique sur le revêtement galvanisé.
